# EUROPEAN PATENT APPLICATION

(11) **EP 1 568 918 A2**
(43) Date of publication of application: **31.08.2005**
(21) Application number: 05101330.8
(22) Date of filing: 22.02.2005
(51) Int. Cl.: F16H 57/02, F16H 48/08

(54) **Improvements to a driven-axle differential for a vehicle**

(30) Priority: 24.02.2004 IT MI20040307
(71) Applicant: IVECO S.p.A., 10156 Torino (IT)
(72) Inventor: Musso, Diego, 10141 Torino (IT)
(74) Representative: Gervasi, Gemma

(57) **Abstract**

This invention relates to driven-axle differential for a vehicle, that comprises a support (SUP) that houses two tapered roller bearings (CUS), which are preloaded with high tapering value, and seals (GUE). The driveshaft, engine/transmission side, is inserted into the support.

## Description

This invention relates to improvements to a driven-axle differential for a vehicle.

A driven-axle differential of the type known in the art, especially for use in commercial or industrial vehicles, consists of a casing that houses all the differential components, and thus all the gears and pinions of the wheel shafts and the engine/transmission driveshaft with the relative supports. The pinion supports comprise bearings, usually of the tapered roller type, which require preloading before use. Generally a bearing support is also present at the head of the pinion of the engine/transmission driveshaft.

Bearing preloading is a laborious process, in that it involves controlling the internal clearance and then disassembling and reassembling the various components in order to measure and adjust the rolling torque. These operations can also undermine the tightness of the seals, already made more complex due to the use of tapered roller bearings.

The purpose of this invention is to propose a driven-axle differential for a vehicle to overcome all the drawbacks described above.

This invention relates to a driven-axle differential for a vehicle, into which an engine/transmission-side driveshaft, with a relative pinion, is inserted, characterized in that said pinion projects inside the driven-axle differential, in a support-less way on the head region, and said driven-axle differential comprises a support in the driveshaft region behind the pinion that houses two tapered roller bearings, said bearings being pre-loaded, in reciprocal contact, with high tapering value.

This invention also refers to a method of assembling the driven-axle differential according to this invention.

In particular this invention refers to a driven-axle differential for a vehicle, and to a method of assembling the driven-axle differential, as described more fully in the claims, which are an integral part of this description.

The purposes and advantages of this invention will become clear from the following detailed description of a preferred embodiment (and the relative alternative forms of embodiment) and the drawings that are attached hereto, which are merely illustrative and not limitative, in which:
figures 1 and 2 show two orthogonal cross-sectional top and side views of the axle according to this invention;
figure 3 shows loading lines of the bearings.

In the drawings the same reference numbers and letters are used to identify the same elements.

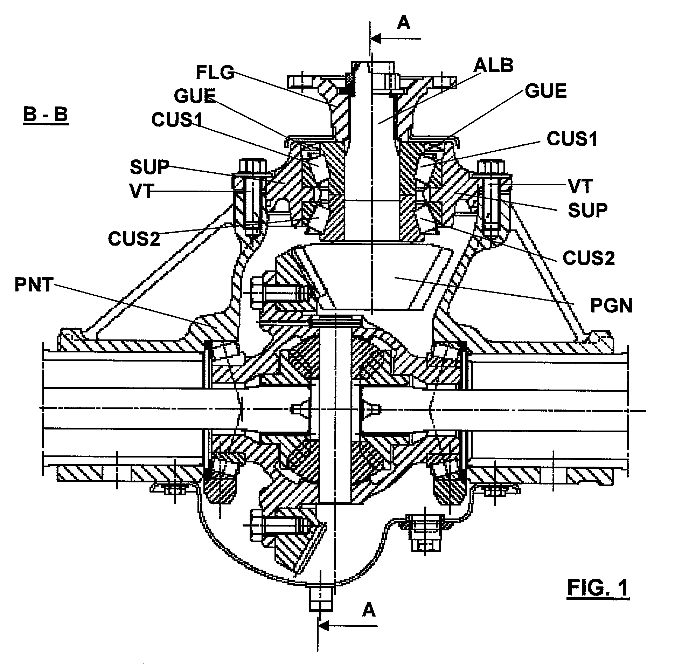

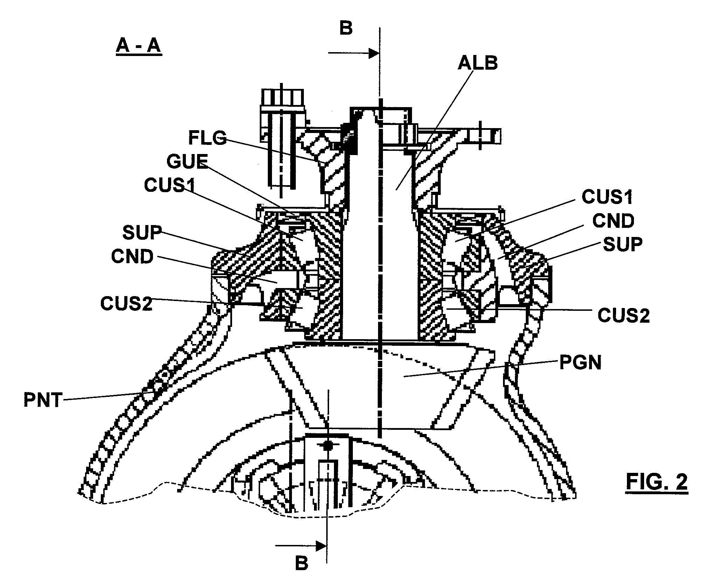

Figures 1 and 2 illustrate, respectively, the A-A and B-B cross-sections, which are orthogonal to one another, of a driven-axle differential PNT.

The driven-axle differential PNT comprises known parts basically consisting of the differential components, such as the gears and pinions of the wheel shafts and the relative supports, for which no further description is given here, as this invention does not regard such parts, which may be of any known type.

The part of PNT that comprises the driveshaft ALB, engine/transmission side, and relative pinion PGN are described here.

The support SUP houses two bearings CUS1, CUS2, of the tapered roller type, placed at a specular angle of inclination in the driveshaft area ALB behind the pinion.

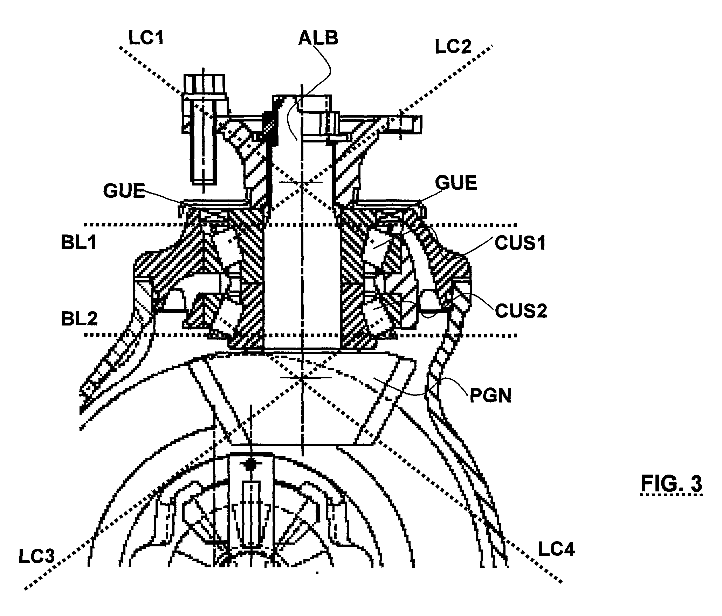

Bearings CUS1, CUS2 are pre-loaded, in close reciprocal contact, with high tapering value, such as their loading lines are moved on the driveshaft ALB out of the bearing lines. Fig. 3 shows the loading lines LC1, ....LC4 crossing over the driveshaft out of the bearing lines BL1, BL2.

By moving the two loading lines far from each other, even if the two bearings are close to each other, a third bearing support is avoided on the head of the pinion, inside the driven-axle differential. The pinion PGN projects inside the differential in a support-less way.

The support also houses a radial lip seal GUE, made of a known material suitable to the purpose. The radial lip seal GUE is integral with the support, substantially in contact with bearings CUS1.

The elements within the support SUP are held in place by a flange FLG.

There is a hole in the center of the support. The driveshaft ALB enters and rotates in such hole.

There are also some channels CND along which the lubricating oil flows. Such channels are machined directly in the walls of the support SUP and communicate at one end with the inside of the driven-axle differential PNT and at the other end with the housing of the bearings. They receive the oil from inside the axle and carry it directly to the bearings.

The support SUP, with its components, is fitted to the axle PNT, for example using screws VT.

The method of assembling the driven-axle differential consists of a first step in which the support SUP is preassembled with the bearings CUS1, CUS2, and the seal GUE. Bearing preloading is performed at this stage.

A second step consists of inserting the shaft ALB with the pinion PGN and the support SUP in the driven-axle differential. The flange FLG is mounted to hold such parts in place and the complete assembly is screwed onto the axle.

Since the support SUP is not part of the axle structure, it may be made of a lightweight material, for example aluminium, or a lightweight magnesium alloy.

It will be apparent to the person skilled in the art that other alternative and equivalent embodiments of the invention can be conceived and reduced to practice without departing from the true spirit of the invention.

The advantages in connection with the use of this invention are clear.

No initial preloading is required when assembling the bearings, as the support that is mounted contains preloaded components and also comprises the integrated bearing support. This reduces rotational torque errors and also enables any adjustment and assembly errors to be eliminated.

Therefore the preassembling avoids the pre-loading phase, which should be necessary adopting high tapering bearings in a traditional configuration, namely at a given reciprocal distance. On the other hand by having them close, a third bearing should be necessary on the pinion head to render it stable with respect to the crown wheel. Instead by the present invention, the two bearings can be put in a close reciprocal position without the third bearing.

While in the known driven-axle differentials the seal is put out of the bearing area, with less assembly precision, with the present invention the seal GUE is inserted inside the pre-assembled support SUP, obtaining a better assembling precision, to the advantage of the life of the system.

Maximum compaction and reduced dimensions also improve the homokynetic kinematics.

The channels that carry the oil to lubricate the bearings are machined directly in the bearing support, which facilitates machining and operation.

The seal is of the radial lip type. It is made of ordinary material and is smaller, since once fitted the seal is not affected by the preloading of the bearings.

As the bearing support is not part of the axle structure it may be made of a lighter material instead of cast iron, which is used for the rest of the axle assembly. The result is a reduction in the overall weight of the assembly. In the prior art, the axle assembly is a single part that also includes the bearing support, which also has a structural function, and is also made of cast iron.

The use of a lighter material also improves heat conduction and heat dissipation compared to cast iron.

The overall structure is therefore more compact and shorter.

From the description set forth above it will be possible for the person skilled in the art to embody the invention without introducing any further construction details.

## Claims

1. Driven-axle differential for a vehicle, into which an engine/transmission-side driveshaft (ALB), with a relative pinion (PGN), is inserted, **characterized in that** said pinion projects inside the driven-axle differential, in a support-less way on the head region, and said driven-axle differential comprises a support (SUP) in the driveshaft region behind the pinion that houses two tapered roller bearings (CUS1, CUS2), said bearings being pre-loaded, in reciprocal contact, with high tapering value.

2. Driven-axle differential according to claim 1, **characterized in that** said high tapering value is such that loading lines (LC1, ....LC4) of said bearings cross over the driveshaft out of bearing lines (BL1, BL2).

3. Driven-axle differential according to claim 1, **characterized in that** said support (SUP) comprises channels (CND) for the lubricating oil, machined directly in the walls of the support, communicating at one end with the inside of the axle and at the other end with the housing of said bearings.

4. Driven-axle differential according to claim 1, **characterized in that** said bearings (CUS1, CUS2) are of the tapered roller type, placed at a specular angle of inclination.

5. Driven-axle differential according to claim 1, **characterized in that** said support (SUP) comprises seals (GUE) of the radial lip type substantially in contact with said bearings (CUS1, CUS2).

6. Driven-axle differential as in any of the preceding claims, **characterized in that** a flange (FLG) holds in place the elements of said support (SUP) on said driven-axle differential.

7. Method of assembling a driven-axle differential as in any of the previous claims, **characterized in that** it comprises:
- a first step in which said support (SUP) is preassembled with said bearings (CUS1, CUS2), and said seals (GUE), and said bearings are preloaded;
- a second step in which said driveshaft (ALB) with said pinion (PGN) and support (SUP) is inserted in the differential, then the flange (FLG) is mounted and the complete assembly is fixed onto the differential.
